# EUROPÄISCHE PATENTSCHRIFT

(11) **EP 1 950 442 B1**
(45) Veröffentlichungstag und Bekanntmachung des Hinweises auf die Patenterteilung: **29.09.2010**
(21) Anmeldenummer: 07001762.9
(22) Anmeldetag: 26.01.2007
(51) Int. Cl.: F16D 21/06, F16D 25/10

(54) **Doppelkupplung eines Doppelkupplungs-Getriebes**
Double coupling of a double gear coupling
Embrayage double d'un engrenage à embrayage double

(43) Veröffentlichungstag der Anmeldung: 30.07.2008
(73) Patentinhaber: Hoerbiger Antriebstechnik GmbH, 86956 Schongau (DE)
(72) Erfinder: Oswald, Johann, 82438 Eschenlohe (DE); de Maziere, Filip, 9070 Heusden (BE); Genouw, Didier, 8480 Eenegem (BE); Pecceu, Hendrik, 8210 Loppem (BE)
(74) Vertreter: Kitzhofer, Thomas

(56) Entgegenhaltungen:
- WO-A1-03/106868
- DE-C1- 4 136 040
- DE-U1- 20 320 467
- FR-A1- 2 759 132

## Beschreibung

Die Erfindung betrifft eine Doppelkupplung eines Doppelkupplungsgetriebes gemäß dem Oberbegriff des Anspruches 1.

Eine derartige Doppelkupplung ist aus der DE 203 20 467 U1 bekannt.

Aus der WO 03/10688 A1 ist eine weitere Doppelkupplung bekannt, die zwei nebeneinander angeordnete Kupplungspakete aufweist. Eines der Kupplungspakete weist einen mit einer Wellenform versehenen Lamellenträger auf, der mit einem Abstandshalter gleicher Form in Eingriff steht.

Doppelkupplungsgetriebe finden durch ihre zahlreichen Vorteile heute immer mehr Verwendung im Kfz - Bau. Ein Schlüsselelement dieser Getriebebauart ist dabei die nass- oder trockenlaufende Doppelkupplung, welche je nachdem das Motormoment auf eines der beiden Teilgetriebe leitet. Während eine Kupplung geschlossen ist, ist dabei die andere geöffnet. Auf der Getriebewelle der geöffneten Kupplung wird dann der Gang gewechselt. Produziert die geöffnete Kupplung dabei hohe Schleppmomente, müssen diese Momente beim Synchronisieren der Gänge zusätzlich zur Trägheit der Getriebewellen überwunden werden. Dies bedeutet in der Praxis entweder eine Verringerung der Lebensdauer der Synchroneinheiten oder aber üblicherweise die Verwendung von leistungsfähigeren und damit teureren Synchronringen. Gleichzeitig tragen hohe Schleppmomente zu einem erhöhten Kraftstoffverbrauch des Kfz bei. Die Schleppmomente rühren hauptsächlich aus der Tatsache, dass beide Kupplungen im Betrieb gemeinsam geschmiert werden. Die Flüssigkeitsreibung zwischen den Kupplungslamellen verursacht dabei diese Momente.

Es ist daher Aufgabe der vorliegenden Erfindung, eine Doppelkupplung der im Oberbegriff des Anspruchs 1 angegebenen Art zu schaffen, die eine getrennte Schmierung ihrer Kupplungen möglich macht und dabei im bauraumsparenden Koaxial- oder "Nested-"Design mit ineinanderliegenden Kupplungen aufgebaut ist.

Die Lösung dieser Aufgabe erfolgt durch die Merkmale des Anspruchs 1.

Im Einzelnen wird die erfindungsgemäße Aufgabe dadurch gelöst, dass ein gemeinsamer Lamellenträger für beide Kupplungspakete verwendet wird, welcher dadurch gekennzeichnet ist, dass zwei Naben mit Verzahnung für die Lamellenpakete ineinandergesteckt werden. Dadurch bilden sich zwischen den Zähnen der beiden Verzahnungen axiale Schlitze.

Werden diese Schlitze bzw. Hohlräume bevorzugterweise durch entsprechende Bleche einseitig axial abgedeckt, kann das Öl den beiden einzelnen Kupplungen getrennt zu- bzw. von diesen abgeführt werden. Dazu werden vorzugsweise in die Verzahnungen speziell verteilte Löcher eingestanzt, welche das Öl von der einen Seite der gesamten Kupplung, z.B. der äußeren Kupplung, zuführen und zur anderen Seite der gesamten Kupplung das Öl der inneren Kupplung abführen. Vorzugsweise wird hierzu das Öl für die beiden Kupplungen getrennt zugeführt und in der Kupplung den einzelnen Kupplungen getrennt zugeführt. Dies kann durch entsprechende Bleche im Kupplungsgehäuse bewirkt werden.

Die Unteransprüche haben vorteilhafte Weiterbildungen der Erfindung zum Inhalt.

Weitere Einzelheiten, Vorteile und Merkmale der Erfindung ergeben sich aus nachfolgender Beschreibung von Ausführungsbeispielen anhand der Zeichnung. Darin zeigt:
- Fig. 1: eine schematisch stark vereinfachte Prinzipdarstellung des Aufbaues einer erfindungsgemäßen Doppelkupplung, insbesondere einer nasslaufenden Doppelkupplung, und
- Fig. 2: eine vereinfachte Darstellung der beiden ineinandergesteckten Naben des Lamellenträgers mit Zahnhohlräumen.

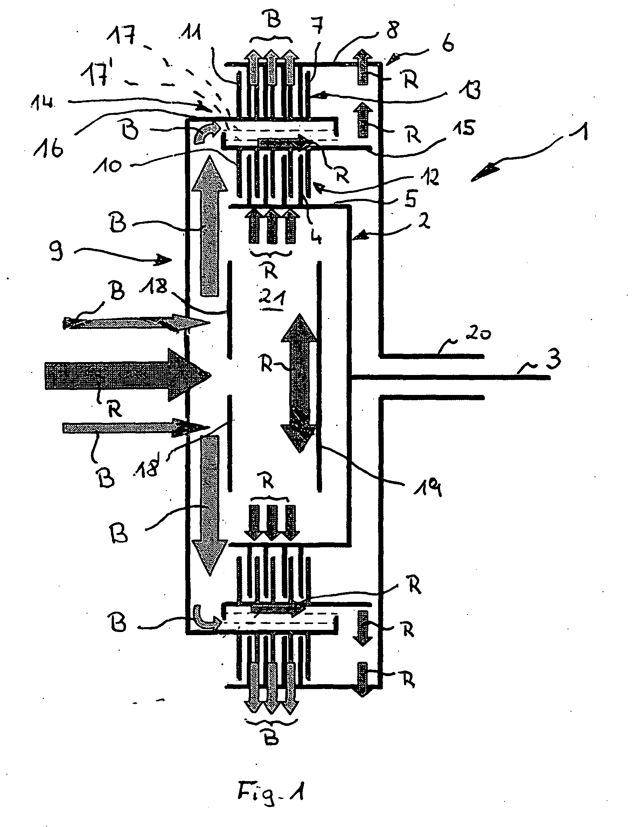

In Fig. 1 ist schematisch vereinfacht eine erfindungsgemäße Doppelkupplung 1 eines Doppelkupplungsgetriebes dargestellt, das in Fig. 1 zur Vereinfachung der Beschreibung nicht näher dargestellt ist.

Die Doppelkupplung 1 weist eine innere Kupplung 2 auf, die mit einer inneren Welle 3 verbunden ist. Die innere Kupplung 2 weist einen Lamellenträger 5 auf, der mit inneren Lamellen versehen ist, wobei in der in Fig. 1 dargestellten Ausführungsform beispielhaft eine von vier inneren Lamellen mit der Bezugsziffer 4 gekennzeichnet ist.

Die Doppelkupplung 1 weist ferner eine äußere Kupplung 6 auf, die mit einer äußeren Hohlwelle 20 verbunden ist, in der koaxial die innere Welle 3 verläuft, was sich im Einzelnen aus der Darstellung der Fig. 1 ergibt. Die äußere, mit der äußeren Welle 20 verbundene Kupplung 6 weist einen äußeren Lamellenträger 8 auf, der mit äußeren Lamellen versehen ist, wobei gemäß der in Fig. 1 dargestellten Ausführungsform beispielhaft vier äußere Lamellen 7 vorgesehen sind.

Ferner weist die Doppelkupplung 1 ein Antriebsteil 9 auf, das auf einer nicht näher dargestellten Antriebswelle angeordnet ist. Das Antriebsteil 14 weist innere und äußere Antriebslamellen auf, wobei im Beispielsfalle fünf äußere und fünf innere Antriebslamellen vorgesehen sind, von denen eine äußere Antriebslamelle mit der Bezugsziffer 11 und eine der inneren Antriebslamellen mit der Bezugsziffer 10 in Fig. 1 repräsentativ für alle Antriebslamellen gekennzeichnet sind.

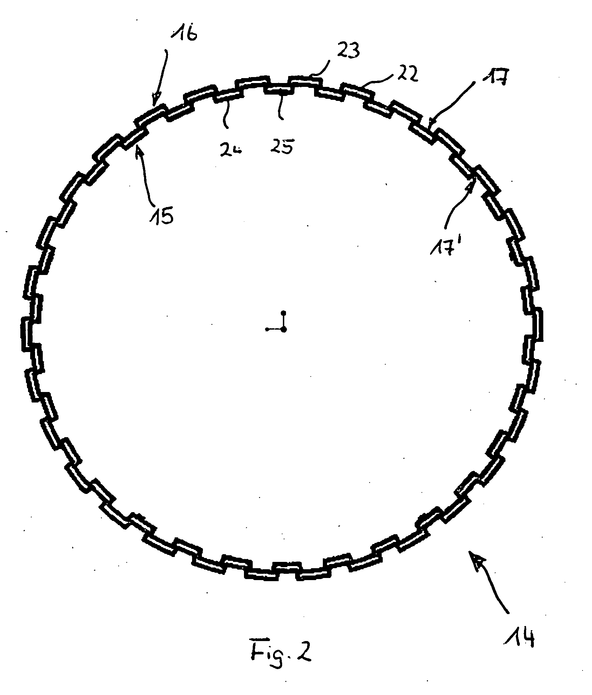

Fig. 1 verdeutlicht, dass die inneren und äußeren Antriebslamellen 10 bzw. 11 auf einem einzigen Lamellenträger bzw. -korb 14 angeordnet bzw. fixiert sind, der zwischen dem inneren und äußeren Lamellenträger 5 bzw. 8 angeordnet ist. Der Lamellenkorb 14 ist aus zwei ineinandergesteckten Naben 15, 16 aufgebaut, die mit zugeordneten Verzahnungen 17 bzw. 17' versehen sind (siehe Fig. 2).

Die Blockpfeile B, R in Fig. 1 stellen die beiden Ölströme für die Kupplungen 2 bzw. 6 dar. Das Öl B für die äußere Kupplung 6 tritt über die Kupplungsnabe in das Gehäuseinnere 21 ein, wird über Leitbleche 18 und 18' nach außen umgelenkt und tritt dann (in Fig. 1 von links) in obere Zahnhohlräume 22, 23 (siehe Fig. 2) ein, von wo aus es über in die Verzahnung gestanzte Löcher (nicht dargestellt) in ein Lamellenpaket 13 verteilt wird. Nachdem es dieses durchströmt hat, tritt es auf herkömmlichem Weg durch Löcher im äußeren Lamellenträger 8 wieder aus der äußeren Kupplung 6 aus.

Der Ölfluss R für die innere Kupplung 2 tritt über andere Bohrungen in der Nabe der Kupplung in den Gehäuseinnenraum 21 der Kupplung axial versetzt zum Öl B ein und ist dadurch separat ansteuerbar. Er wird über das Leitblech 19 verteilt und dadurch der inneren Nabe der inneren Kupplung 2 zugeführt. Durch diese strömt es über Löcher und schmiert damit ein inneres Lamellenpaket 12. Aus diesem tritt es dann über Bohrungen im äußeren Lamellenträger 8 in untere Zahnhohlräume 24, 25 (siehe Fig. 2) ein und tritt dann axial (in Fig. 1 rechts) aus dem Lamellenträger aus, um schließlich die Kupplung nach Durchströmen des äußeren Lamellenträgers 8 der äußeren Kupplung 6 über Löcher zu verlassen. Die Leitbleche 18, 18', 19 müssen keine separaten Bauteile sein, sondern können vielmehr durch entsprechende Formgebung der weiteren Bauteile der Kupplung dargestellt werden.

Durch diese Anordnung wird es möglich, die beiden Kupplungen 2, 6 getrennt mit Öl zu versorgen. Dadurch kann jede der Kupplungen 2, 6 einzeln bei Bedarf komplett ölfrei gemacht werden.

Vorteile
- Drastische Verringerung der Schleppmomente
- Einfachster Aufbau, nur wenige Zusatzteile erforderlich
- Äußerst modulares Konzept, bei Bedarf kann die Kupplung ohne großen zusätzlichen Konstruktionsaufwand auf herkömmliche Schmierung umgestellt werden
- Äußerst bauraumsparendes Design möglich

### Bezugszeichenliste

- 1: Doppelkupplung, insbesondere nass- oder trockenlaufende Doppelkupplung des Nested-Design eines Doppelkupplungsgetriebes
- 2: Innere Kupplung
- 3: Innere Welle
- 4: Innere Lamellen
- 5: Innerer Lamellenträger
- 6: Äußere Kupplung
- 7: Äußere Lamellen
- 8: Äußerer Lamellenträger
- 9: Antriebsteil
- 10: Innere Antrieblamellen
- 11: Äußere Antriebslamellen
- 12, 13: Kupplungspakete (gebildet von 4/10 bzw. 7/11)
- 14: Lamellenkorb/Lamellenträger
- 15, 16: Naben des Lamellenträgers 14
- 17, 17': Verzahnungen der Naben 15, 16
- 18, 18', 19: Leitbleche
- 20: Äußere Welle
- 21: Gehäuseinnenraum
- 22, 23: Obere Zahnhohlräume (repräsentative Kennzeichnung für alle oberen Zahnhohlräume)
- 24, 25: Untere Zahnhohlräume (repräsentative Kennzeichnung für alle unteren Zahnhohlräume)
- B: Ölflussblockpfeile für die äußere Kupplung 6
- R: Ölflussblockpfeile für die innere Kupplung 2

## Patentansprüche

1. Doppelkupplung (1) eines Doppelkupplungsgetriebes
- mit einer inneren Kupplung (2), die mit einer inneren Welle (3) verbunden ist und einen inneren Lamellenträger (5) für innere Lamellen (4) aufweist;
- mit einer äußeren Kupplung (6), die mit einer äußeren zur inneren Welle (3) koaxial angeordneten Hohlwelle (20) verbunden ist und einen äußeren Lamellenträger (8) für äußere Lamellen (7) aufweist;
- mit einem Antriebsteil (9), das auf einer Antriebswelle angeordnet ist und innere sowie äußere Antriebslamellen (10 bzw. 11) aufweist, die mit den inneren bzw. äußeren Lamellen (4 bzw. 7) in Wirkverbindung bringbar sind und die mit den Lamellen (4 bzw. 7) ein inneres Kupplungspaket (12) bzw. ein äußeres Kupplungspaket (13) bilden; und
- mit einem am Antriebsteil (9) befestigten gemeinsamen Lamellenträger (14) für die Antriebslamellen der beiden Kupplungspakete (12, 13);
**dadurch gekennzeichnet,**
- **dass** der Lamellenträger (14) zwei ineinandergesteckte Naben (15, 16) aufweist, die den Kupplungspaketen (12 bzw. 13) zugeordnet sind, wobei jede Nabe (15, 16) eine Verzahnung (17 bzw. 17') aufweist; und
- **dass** die Ölzufuhr für die äußere Kupplung (6) über die oberen oder unteren Zahnhohlräume (22, 23) erfolgt und die Ölabfuhr der inneren Kupplung (2) über die unteren oder oberen Zahnhohlräume (24, 25) erfolgt.

2. Doppelkupplung (1) nach Anspruch 1, **dadurch gekennzeichnet, dass** die Verzahnungen (17, 17') spielfrei ineinanderstecken und die sich zwischen den Verzahnungen (17, 17') bildenden Hohlräume (22-25) vorzugsweise einseitig axial abgedeckt sind.

3. Doppelkupplung (1) nach Anspruch 1, **dadurch gekennzeichnet, dass** die Verzahnung (17, 17') verteilt angeordnete Löcher bzw. Durchbrüche aufweist.

4. Doppelkupplung (1) nach einem der Ansprüche 1 bis 3, **dadurch gekennzeichnet, dass** im Kupplungsgehäuseinnenraum (21) Leitbleche (18, 18', 19) zur Aufteilung von Ölströmen (B, R) im Gehäuseinnenraum (21) vorgesehen sind.

5. Doppelkupplung (1) nach Anspruch 4, **dadurch gekennzeichnet, dass** zur Ölverteilung in der Kupplung zusätzlich oder ausschließlich vorhandene Bauteile der Kupplung vorgesehen sind.

6. Doppelkupplung (1) nach einem der Ansprüche 1 bis 5, **dadurch gekennzeichnet, dass** die innere Nabe (15) des Lamellenträgers (14), welche auf ihrer Innenseite die Antriebslamellen für die innere Kupplung (2) aufnimmt, in eine mit dem Antriebsteil (9) verbundene äußere Nabe (16), welche auf ihrer Außenseite die Antriebslamellen für die äußere Kupplung (6) aufnimmt, gesteckt und axial fixiert ist.

7. Doppelkupplung (1) nach einem der Ansprüche 1 bis 5, **dadurch gekennzeichnet, dass** die äußere Nabe (16) des Lamellenträgers (14), welche auf ihrer Außenseite die Antriebslamellen für die äußere Kupplung (6) aufnimmt, um eine mit dem Antriebsteil (9) verbundene innere Nabe (15), welche auf ihrer Innenseite die Antriebslamellen für die innere Kupplung aufnimmt, gesteckt und axial fixiert ist.

8. Doppelkupplung (1) nach einem der Ansprüche 1 bis 5, **dadurch gekennzeichnet, dass** beide Naben (15, 16) des Lamellenträgers (14) mit dem Antriebsteil (9) verbunden sind.

## Claims

1. A twin clutch (1) of a twin-clutch transmission
- with an inner clutch (2) which is connected with an inner shaft (3) and includes an inner disk carrier (5) for inner disks (4);
- with an outer clutch (6) which is connected with an outer hollow shaft (20) arranged coaxially with respect to the inner shaft (3) and includes an outer disk carrier (8) for outer disks (7);
- with a drive member (9) which is arranged on a drive shaft and includes inner and outer drive disks (10, 11), which can operatively be connected with the inner and outer disks (4, 7), respectively, and which form an inner clutch pack (12) and an outer clutch pack (13), respectively, with the disks (4, 7); and
- with a common disk carrier (14) for the drive disks of the two clutch packs (12, 13), which is attached to the drive member (9);
**characterized in**
- **that** the disk carrier includes two hubs (15, 16) inserted into each other, which are associated to the clutch packs (12, 13), wherein each hub (15, 16) includes a toothing (17, 17'); and
- **that** the oil supply for the outer clutch (6) is effected via the upper or lower tooth cavities (22, 23) and the oil discharge of the inner clutch (2) is effected via the lower or upper tooth cavities (24, 25).

2. The twin clutch (1) according to claim 1, **characterized in that** the toothings (17, 17') engage in each other without clearance and the cavities (22-25) formed between the toothings (17, 17') preferably are unilaterally covered in axial direction.

3. The twin clutch (1) according to claim 1, **characterized in that** the toothing (17, 17') includes distributed holes or apertures.

4. The twin clutch (1) according to any of claims 1 to 3, **characterized in that** in the clutch housing interior (21) baffle plates (18, 18', 19) are provided for dividing oil streams (B, R) in the housing interior (21).

5. The twin clutch (1) according to claim 4, **characterized in that** for oil distribution in the clutch additionally or exclusively present components of the clutch are provided.

6. The twin clutch (1) according to any of claims 1 to 5, **characterized in that** the inner hub (15) of the disk carrier (14), which on its inside accommodates the drive disks for the inner clutch (2), is inserted and axially fixed in an outer hub (16) connected with the drive member (9), which on its outside accommodates the drive disks for the outer clutch (6).

7. The twin clutch (1) according to any of claims 1 to 5, **characterized in that** the outer hub (16) of the disk carrier (14), which on its outside accommodates the drive disks for the outer clutch (6), is inserted and axially fixed around an inner hub (15) connected with the drive member (9), which on its inside accommodates the drive disks for the inner clutch.

8. The twin clutch (1) according to any of claims 1 to 5, **characterized in that** both hubs (15, 16) of the disk carrier (14) are connected with the drive member (9).

## Revendications

1. Double embrayage (1) pour boîte de vitesses à double embrayage, comportant
- un embrayage intérieur (2) qui est relié à un arbre intérieur (3) et présente un support de disques intérieur (5) pour des disques intérieurs (4) ;
- un embrayage extérieur (6) qui est relié à un arbre creux extérieur (20) agencé de façon coaxiale par rapport à l'arbre intérieur (3) et présente un support de disques extérieur (8) pour des disques extérieurs (7) ;
- une pièce d'entraînement (9) agencée sur un arbre d'entraînement et présentant des disques d'entraînement intérieurs et extérieurs (10 et 11, respectivement) qui peuvent être amenés en liaison fonctionnelle avec les disques intérieurs et extérieurs, respectivement (4 et 7, respectivement) et forment conjointement avec les disques (4 et 7, respectivement) un ensemble d'embrayage intérieur (12) et un ensemble d'embrayage extérieur (13), respectivement; et
- un support de disques (14) commun fixé à la pièce d'entraînement (9) pour les disques d'entraînement des deux ensembles d'embrayage (12, 13) ;
**caractérisé en ce que**
- le support de disques (14) présente deux moyeux (15, 16) insérés l'un dans l'autre qui sont associés aux ensembles d'embrayage (12 et 13, respectivement), chaque moyeu (15, 16) présentant une denture (17 et 17', respectivement) ; et
- l'amenée d'huile pour l'embrayage extérieur (6) est réalisée au moyen des creux de dents (22, 23) supérieurs ou inférieurs, et l'évacuation d'huile pour l'embrayage intérieur (2) est réalisée au moyen des creux de dents (24, 25) inférieurs ou supérieurs.

2. Double embrayage (1) selon la revendication 1, **caractérisé en ce que** les dentures (17, 17') s'engagent l'une dans l'autre sans jeu, et **en ce que** les creux (22-25) réalisés entre les dentures (17, 17') sont de préférence recouverts d'un côté en direction axiale.

3. Double embrayage (1) selon la revendication 1, **caractérisé en ce que** la denture (17, 17') présente des trous ou des orifices agencés de façon répartie.

4. Double embrayage (1) selon l'une des revendications 1 à 3, **caractérisé en ce que** des chicanes (18, 18', 19) sont prévues dans l'intérieur (21) du boîtier d'embrayage pour une distribution de flux d'huile (B, R) dans l'intérieur (21) du boîtier.

5. Double embrayage (1) selon la revendication 4, **caractérisé en ce que** des composants de l'embrayage présents additionnellement ou exclusivement sont prévus pour la distribution d'huile dans l'embrayage.

6. Double embrayage (1) selon l'une des revendications 1 à 5, **caractérisé en ce que** le moyen intérieur (15) du support de disques (14) recevant les disques d'entraînement pour l'embrayage intérieur (2) sur sa face intérieure, est inséré et fixé axialement dans un moyeu extérieur (16) relié à la pièce d'entraînement (9) et recevant les disques d'entraînement pour l'embrayage extérieur (6) sur sa face extérieure.

7. Double embrayage (1) selon l'une des revendications 1 à 5, **caractérisé en ce que** le moyen extérieur (16) du support de disques (14) recevant les disques d'entraînement pour l'embrayage extérieur (6) sur sa face extérieure, est inséré et fixé axialement autour d'un moyeu intérieur (15) relié à la pièce d'entraînement (9) et recevant les disques d'entraînement pour l'embrayage intérieur sur sa face intérieure.

8. Double embrayage (1) selon l'une des revendications 1 à 5, **caractérisé en ce que** les deux moyeux (15, 16) du support de disques (14) sont reliés à la pièce d'entraînement (9).
